# EUROPEAN PATENT SPECIFICATION

(11) **EP 2 610 294 B1**
(45) Date of publication and mention of the grant of the patent: **13.08.2014**
(21) Application number: 12198911.5
(22) Date of filing: 21.12.2012
(51) Int. Cl.: C08K 7/14, C08L 69/00, H04N 5/64

(54) **Television housing and method for manufacturing the same**
Fernsehergehäuse und Verfahren zu seiner Herstellung
Boîtier de télévision et procédé de fabrication de celui-ci

(30) Priority: 29.12.2011 KR 20110146561
(43) Date of publication of application: 03.07.2013
(73) Proprietor: CHEIL INDUSTRIES INC., Gumi-si, Gyeongsangbuk-do 730-710 (KR)
(72) Inventor: Lee, Jo Won, Uiwang-si, Gyeonggi-do (KR); Chin, Kyong Sik, Uiwang-si, Gyeonggi-do (KR); Joo, Min Jung, Uiwang-si, Gyeonggi-do (KR); Shin, Seung Shik, Uiwang-si, Gyeonggi-do (KR)
(74) Representative: Bublak, Wolfgang

(56) References cited:
- JP-A- 2006 240 085

## Description

The present invention relates to a television housing and a method for manufacturing the same. More particularly, the present invention relates to a television housing that uses a non-adhesive glass fiber and is manufactured by a particular molding process to achieve superior results in terms of appearance, dimensional stability, surface roughness and stiffness. The present invention also relates to a method for manufacturing the television housing.

PC/ABS is a blend of polycarbonate (PC) and acrylonitrile-butadiene-styrene (ABS). PC/ABS is generally used as an exterior material for electronic products that require excellent physical properties, for example, high gloss, high flowability and good impact resistance.

PC/ABS products reinforced with glass fibers are currently being developed because of low stiffness and poor dimensional stability of PC/ABS.

Such glass fiber reinforced PC/ABS is used in products requiring good dimensional stability and high stiffness and is also widely as a material for interior parts of electrical/electronic products. However, inferior appearance quality of glass fiber reinforced resins makes them difficult to apply to exterior parts of electronic products, and as a result, there is a limitation in extending the applicability of glass fiber reinforced resins.

That is, glass fibers are effective in achieving improved dimensional stability and stiffness but tend to protrude from PC/ABS blends, which limits their application for good appearance.

JP 2006 240085 A discloses in example 3 a metal-clad ABS composition for use in TV housings comprising PC and glass fibers.

There is thus a need to develop a material that is highly dimensionally stable and has high stiffness with good appearance.

The first object of the present invention is to provide a television housing with excellent properties in terms of gloss, appearance and surface roughness which includes a plastic member having good dimensional stability and high stiffness with good appearance, and a SUS frame whose shrinkage is minimally different from that of the plastic member. The second object of the present invention is to provide a method for manufacturing the television housing.

The first object of the present invention has been achieved by the provision of a television housinghaving a structure including a stainless steel (SUS) frame; and a plastic member in contact with at least one side of the stainless steel frame, wherein the plastic member includes (A) a polycarbonate resin, (B) a rubber modified aromatic vinyl graft copolymer resin, and (C) a non-adhesive glass fiber.

In an embodiment, the plastic member is produced by a steam molding process.

In an embodiment, the plastic member has a gloss of at least 95, as measured in accordance with the method of ASTM D 2457, and a surface roughness (Ra) not greater than 20 nm, as measured in accordance with the method of ASTM D 4417-B.

In an embodiment, the difference in shrinkage between the stainless steel (SUS) frame and the plastic member is not greater than 0.003 cm/cm, as measured in accordance with the method of ASTM C356.

In an embodiment, the non-adhesive glass fiber (C) may have an average length of 2 to 5 mm and an average diameter of 10 to 20 µm

In an embodiment, the non-adhesive glass fiber (C) is not exposed to the surface of the plastic member.

In an embodiment, the plastic member may include at least one of flame retardants, impact-reinforcing agents, anti-drip agents, antibacterial agents, heat stabilizers, antioxidants, release agents, light stabilizers, inorganic additives, surfactants, plasticizers, lubricants, antistatic agents, and colorants.

The second aspect of the present invention has been achieved by the provision of a method for manufacturing a television housing. The method includes: steam-molding (A) a polycarbonate resin, (B) a rubber modified aromatic vinyl graft copolymer resin, and (C) a non-adhesive glass fiber into a plastic member; and bonding the plastic member to a stainless steel (SUS) frame.

In an embodiment, the steam molding is performed by a rapid heat cycle molding (RHCM) process.

### Brief description of drawing

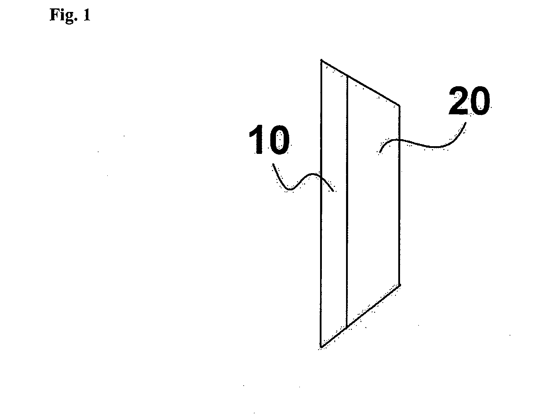

Fig. 1 is a cross-sectional view of a television housing according to one embodiment of the present invention.

### Detailed Description of the Invention

Embodiments of the present invention will now be described in detail. These embodiments are set forth for illustrative purposes and the present invention is not limited thereto. The scope of the invention is defined by the scope of the claims that follow.

The objects, features, and advantages of the invention will become apparent with reference to the accompanying drawings. In the drawings, the size of elements may be exaggerated for clarity and the present invention is not limited thereto.

Fig. 1 is a cross-sectional view of a television housing according to one embodiment of the present invention. As illustrated in Fig. 1, the television housing has a structure including a stainless steel (SUS) frame 10 and a plastic member 20 in contact with at least one side of the stainless steel frame 10.

The stainless steel frame 10 and the plastic member 20 are not limited to the shapes illustrated in FIG. 1 and may have various shapes so long as at least one side of the stainless steel frame 10 is in contact with at least one side of the plastic member 20. There is no restriction as to the method for realizing the contact structure. For example, the stainless steel frame 10 may be brought into contact with the plastic member 20 by adhesion or insertion.

The stainless steel frame 10 may be a commercially readily available product for television housing application.

The plastic member 20 is not limited to a particular shape but includes (A) a polycarbonate resin, (B) a rubber modified aromatic vinyl graft copolymer resin, and (C) a non-adhesive glass fiber.

Hereinafter, the constituent components of the plastic member 20 will be specifically discussed.

### (A) Polycarbonate resin

The polycarbonate resin (A) may be produced by reacting diphenols with phosgene, a halogen acid ester, a carboxylic acid ester or a combination thereof. The diphenols are represented by Formula 1: 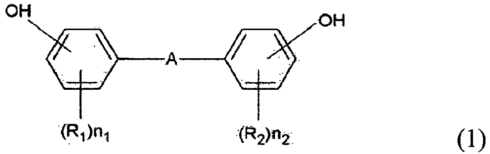 wherein A represents a single bond or is a substituted or unsubstituted C₁-C₃₀ straight or branched alkylene group, a substituted or unsubstituted C₂-C₅ alkenylene group, a substituted or unsubstituted C₂-C₅ alkylidene group, a substituted or unsubstituted C₁-C₃₀ straight or branched haloalkylene group, a substituted or unsubstituted C₅-C₆ cycloalkylene group, a substituted or unsubstituted C₅-C₆ cycloalkenylene group, a substituted or unsubstituted C₅-C₁₀ cycloalkylidene group, a substituted or unsubstituted C₆-C₃₀ arylene group, a substituted or unsubstituted C₁-C₂₀ straight or branched alkoxylene group, a halogen acid ester, a carboxylic acid ester, -CO-, -S-, or -SO₂-; R₁ and R₂ are the same or different and are each independently a substituted or unsubstituted C₁-C₃₀ alkyl group or a substituted or unsubstituted C₆-C₃₀ aryl group; and n₁ and n₂ are each independently an integer from 0 to 4.

The term "substituted" used herein means that at least one hydrogen atom is a substituted with halogen atom, a hydroxyl group, a nitro group, a cyano group, an amino group, an azido group, an amidino group, a hydrazino group, a carbonyl group, a carbamyl group, a thiol group, an ester group, a carboxyl group or a salt thereof, a sulfonic acid group or a salt thereof, a phosphate group or a salt thereof, a C₁-C₂₀ alkyl group, a C₂-C₂₀ alkenyl group, a C₂-C₂₀ alkynyl group, a C₁-C₂₀ alkoxy group, a C₆-C₃₀ aryl group, a C₆-C₃₀ aryloxy group, a C₃-C₃₀ cycloalkyl group, a C₃-C₃₀ cycloalkenyl group, a C₃-C₃₀ cycloalkynyl group, or a combination thereof.

The diphenols represented by Formula 1 may be combined to constitute repeating units of the polycarbonate resin. Specific examples of the diphenols include hydroquinone, resorcinol, 4,4'-dihydroxydiphenyl, 2,2-bis(4-hydroxyphenyl)propane (referred to as 'bisphenol-A'), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether, and the like. The use of 2,2-bis(4-hydroxyphenyl)propane, 2,2-bis(3,5-dichloro-4-hydroxyphenyl)propane or 1,1-bis(4-hydroxyphenyl)cyclohexane is preferred. The use of 2,2-bis(4-hydroxyphenyl)propane is more preferred.

The polycarbonate resin has a weight average molecular weight ranging from 10,000 to 200,000 g/mol, for example, from 15,000 to 80,000 g/mol, but is not limited to this range.

The polycarbonate resin (A) may be a mixture of copolymers produced from diphenols. The polycarbonate resin (A) may be a linear polycarbonate resin, a branched polycarbonate resin, a polyester carbonate copolymer resin, and the like.

For example, the linear polycarbonate resin may be a bisphenol-A type polycarbonate resin, and the like. The branched polycarbonate resin may be produced, for example, by reacting a multifunctional aromatic compound, such as trimellitic anhydride, trimellitic acid, and the like, diphenols, and a carbonate. The multifunctional aromatic compound may be included in an amount of 0.05 to 2 mole%, based on the total weight of the branched polycarbonate resin. For example, the polyester carbonate copolymer resin may be produced by reacting a difunctional carboxylic acid with diphenols and a carbonate. As the carbonate, there may be used, for example, a diaryl carbonate, such as diphenyl carbonate, and the like, or ethylene carbonate.

In some embodiments, the polycarbonate resin (A) may have a melt flow index of 5 to 120 g/10 min, as measured at 300 °C and 1.2 kg in accordance with ISO 1133.

Preferably, a combination of two or more polycarbonates having different melt flow indexes is used. For example, a mixture of 20 to 60% by weight of a polycarbonate resin having a melt flow index of 5 to 15 g/10 min, 20 to 60% by weight of a polycarbonate resin having a melt flow index of 16 to 50 g/10 min, and 5 to 40% by weight of a polycarbonate resin having a melt flow index of 51 to 120 g/10 min may be used. In this case, the polycarbonate resin (A) can have a good balance of physical properties.

The polycarbonate resin (A) may be included in an amount of 60 to 95% by weight, based on the weight of the base resins (A) and (B) constituting the plastic member. The polycarbonate resin (A) is included in an amount of 65 to 90% by weight. Within this range, a good balance of impact strength, heat resistance and processability is ensured.

### (B) Rubber modified aromatic vinyl graft copolymer resin

The rubber modified aromatic vinyl graft copolymer resin (B) is present in an state in which a particulate rubbery polymer is dispersed in a matrix (continuous phase) composed of an aromatic vinyl polymer.

In one embodiment, the rubber modified aromatic vinyl graft copolymer resin (B) is composed of 20 to 50% by weight of a rubbery polymer unit, 40 to 60% by weight of an aromatic vinyl unit, and 10 to 30% by weight of a cyano vinyl unit.

The rubber modified aromatic vinyl graft copolymer resin (B) is produced by adding an aromatic vinyl monomer and optionally a monomer copolymerizable with the aromatic vinyl monomer to a rubbery polymer, followed by polymerization. The rubber modified aromatic vinyl graft copolymer resin may be produced by a known polymerization process, such as emulsion polymerization, suspension polymerization or bulk polymerization. The rubber modified aromatic vinyl graft copolymer resin is usually produced by extrusion of a mixture of (B1) a graft copolymer resin and (B2) a copolymer resin. In the case of bulk polymerization, the rubber modified aromatic vinyl graft copolymer resin may be produced by a one-step reaction process without the need to separately prepare the graft copolymer resin (B1) and the copolymer resin (B2). In either case, most suitable is 1 to 30% by weight of the rubber (i.e. the rubbery polymer) in the weight of the final rubber modified aromatic vinyl graft copolymer resin (B). The rubber has a Z-average particle size of 0.1 to 6.0 µm. More preferably, the rubber has a Z-average particle size of 0.25 to 3.5 µm. Within this range, preferable physical properties are obtained.

The rubber modified aromatic vinyl graft copolymer resin (B) used in the present invention may be produced by using the graft copolymer resin (B1) alone or the graft copolymer resin (B1) and the copolymer resin (B2) in combination. It is preferred to blend the graft copolymer resin (B1) with the copolymer resin (B2) taking into consideration the compatibility thereof.

### (B1) Graft copolymer resin

The graft copolymer resin (B1) used in the present invention is obtained by graft copolymerization of a rubbery polymer, an aromatic vinyl monomer, a monomer copolymerizable with the aromatic vinyl monomer, and optionally a monomer capable of imparting processability and heat resistance.

Examples of such rubbery polymers include diene rubbers, such as polybutadiene, poly(styrene-butadiene), poly(acrylonitrile-butadiene), and the like, saturated rubbers obtained by hydrogenation of the diene rubbers, isoprene rubbers, acrylic rubbers, such as polybutylacrylic acid, and the like, ethylene-propylene-diene monomer (EPDM) terpolymers, and the like. Of these, diene rubbers are particularly preferred and butadiene rubbers are more preferred. The content of the rubbery polymer is suitably from 5 to 65% by weight, based on the total weight of the graft copolymer resin (B1), but is not limited to this range. Preferably, the rubber (i.e. the rubbery polymer) particles have an average size of 0.1 to 6 µm from the viewpoint of impact strength and appearance.

Examples of aromatic vinyl monomers suitable for use in the mixture of the graft copolymerizable monomer mixture include, but are not necessarily limited to, styrene, α-methylstyrene, β-methylstyrene, p-methylstyrene, p-t-butylstyrene, ethylstyrene, vinylxylene, monochlorostyrene, dichlorostyrene, dibromostyrene, vinylnaphthalene, and the like. Styrene is most preferred. For graft copolymerization, the aromatic vinyl monomer is preferably used in an amount of 34 to 94% by weight, based on the total weight of the graft copolymer resin (B1), but is not limited to this range.

At least one monomer copolymerizable with the aromatic vinyl monomer may be incorporated into the graft copolymer resin (B1). Examples of preferred copolymerizable monomers include cyano vinyl compounds, such as acrylonitrile, and unsaturated nitrile compounds, such as ethacrylonitrile and methacrylonitrile. These copolymerizable monomers may be used alone or as a mixture thereof. The content of the copolymerizable monomer for copolymerization is in the range of 1 to 30% by weight, based on the total weight of the graft copolymer resin (B1), but is not limited to this range.

Examples of monomers capable of imparting processability and heat resistance include acrylic acid, methacrylic acid, maleic anhydride, N-substituted maleimide, and the like. The content of the monomer may be in the range of 0 to 15% by weight, based on the total weight of the graft copolymer resin (B1), but is not limited to this range.

### (B2) Copolymer resin

The copolymer resin (B2) is produced by varying the ratio of the monomers other than the rubber in the components of the graft copolymer resin (B1) depending on the compatibility of the monomers. For example, the copolymer resin is obtained by adding a styrene monomer, a monomer copolymerizable with the styrene monomer, and optionally a monomer capable of imparting processability and heat resistance, followed by copolymerization.

Examples of styrene monomers suitable for use in the production of the copolymer resin include, but are not necessarily limited to, styrene, α-methylstyrene, β-methylstyrene, p-methylstyrene, p-t-butylstyrene, ethylstyrene, monochlorostyrene, dichlorostyrene, dibromostyrene, and the like. Of these, styrene is most preferred. The content of the styrene monomer is in the range of 60 to 90% by weight, based on the total weight of the copolymer resin (B2), but is not limited to this range.

Examples of preferred monomers copolymerizable with the styrene monomer include cyano vinyl compounds, such as acrylonitrile, and unsaturated nitrile compounds, such as ethacrylonitrile and methacrylonitrile. These copolymerizable monomers may be used alone or as a mixture thereof. The content of the monomer copolymerizable with the styrene monomer may be in the range of 10 to 40% by weight, based on the total weight of the copolymer resin (B2), but is not limited to this range.

Examples of monomers capable of imparting processability and heat resistance include acrylic acid, methacrylic acid, maleic anhydride, N-substituted maleimide, and the like. The content of the monomer for copolymerization may be in the range of 0 to 30% by weight, based on the total weight of the copolymer resin (B2), but is not limited to this range.

The rubber modified aromatic vinyl graft copolymer resin (B) used in the present invention may be, for example, an acrylonitrile-butadiene-styrene copolymer resin (ABS resin), acrylonitrile-ethylene propylene rubber-styrene copolymer resin (AES resin), an acrylonitrile-acrylic rubber-styrene copolymer resin (AAS resin), and the like.

The rubber modified aromatic vinyl graft copolymer resin (B) used in the present invention is a mixture of 10 to 100% by weight of the graft copolymer resin (B1) and 0 to 90% by weight of the copolymer resin (B2). In one embodiment, the rubber modified aromatic vinyl graft copolymer resin (B) is composed of 55 to 90% by weight of the graft copolymer resin (B1) and 10 to 45% by weight of the copolymer resin (B2). In another embodiment, the rubber modified aromatic vinyl graft copolymer resin (B) is composed of 15 to 50% by weight of the graft copolymer resin (B1) and 50 to 85% by weight of the copolymer resin (B2).

The rubber modified aromatic vinyl graft copolymer resin (B) may be included in an amount of 5 to 40% by weight, based on the weight of the base resins (A) and (B) constituting the plastic member. Preferably, the rubber modified aromatic vinyl graft copolymer resin (B) is included in an amount of 10 to 35% by weight. Within this range, a good balance of impact strength, heat resistance and processability is obtained.

### (C) Non-adhesive glass fiber

The non-adhesive glass fiber (C) used in the present invention refers to a glass fiber free from any adhesive organic material, such as a coupling agent, on the surface thereof.

The non-adhesive glass fiber (C) is not adhered to the matrix upon steam molding and is thus flowable. The non-adhesive glass fiber (C) migrates inside the plastic member upon molding. This migration prevents the non-adhesive glass fiber (C) from being exposed to the surface of the plastic member. The term 'exposed' used herein means that the non-adhesive glass fiber (C) is visible to the naked eye in the sunlight.

The non-adhesive glass fiber (C) used in the present invention has an average length of 2 to 5 mm, preferably 2.5 to 4.5 mm. Within this range, it is easy to feed the non-adhesive glass fiber (C).

The non-adhesive glass fiber (C) has a diameter of 10 to 20 µm, preferably 10 to 15 µm. Within this range, high stiffness is maintained and no protrusion is observed.

The non-adhesive glass fiber (C) may be circular or elliptical in cross-section. The non-adhesive glass fiber (C) is preferably elliptical. In an embodiment, the ratio of the longest diameter (a) to the shortest diameter (b), i.e. (a)/(b), of the non-adhesive glass fiber (C) may be from 1.0 to 1.2. Within this range, good dimensional stability is achieved.

The non-adhesive glass fiber (C) may be included in an amount of 5 to 20 parts by weight, preferably 8 to 17 parts by weight, based on 100 parts by weight of the base resins (A) and (B) constituting the plastic member. Within this range, good appearance can be realized.

The plastic member may further include a flame retardant to achieve improved flame retardancy. Examples of flame retardants suitable for use in the plastic member include, but are not necessarily limited to, phosphorus-based flame retardants and halogenated flame retardant. These flame retardant may be used alone or as a mixture thereof. The use of a phosphorus-based flame retardant is preferred.

The phosphorus-based flame retardant refers to a general phosphorus-containing flame retardant. Examples of such phosphorus-based flame retardants include, but are not necessarily limited to, phosphate, phosphonates, phosphinates, phosphine oxides, phosphazenes, metal salts thereof, and the like.

In addition to the flame retardant, the plastic member may optionally further include at least one of impact-reinforcing agents, anti-drip agents, antibacterial agents, heat stabilizers, antioxidants, release agents, light stabilizers, inorganic additives, surfactants, plasticizers, lubricants, antistatic agents, colorants, and the like.

Another aspect of the present invention provides a method for manufacturing a television housing. The method includes: injecting the polycarbonate resin (A), the rubber modified aromatic vinyl graft copolymer resin (B), and the non-adhesive glass fiber (C) into a mold by steam molding, followed by release from the mold to produce a plastic member; and bonding the plastic member to a stainless steel (SUS) frame.

In an embodiment, the steam molding may be performed by a rapid heat cycle molding (RHCM) process. Specifically, according to the RHCM process, the mold is heated to the glass transition temperatures (Tg) or higher of the resins using steam, and the resins are injected into the mold. The preheating of the mold improves the adhesion of the resins to the mold, thus facilitating impregnation of the non-adhesive glass fiber (C) into the resins to minimize the protrusion of the glass fiber. Then, the resins are cooled. The rapid heat cycle molding (RHCM) can be practiced by those with ordinary knowledge in the art to which the present invention belongs.

The plastic member thus produced may have a gloss of at least 95, as measured in accordance with the method of ASTM D 2457, and a surface roughness (Ra) not greater than 20 nm, as measured in accordance with the method of ASTM D 4417-B.

In an embodiment, the plastic member may have a gloss of 96 to 99, as measured in accordance with the method of ASTM D 2457, and a surface roughness (Ra) of 0.1 to 15 nm, as measured in accordance with the method of ASTM D 4417-B.

The plastic member is highly dimensionally stable. Specifically, the plastic member may have a coefficient of linear thermal expansion (α) not greater than 40 µm/(m°C), as measured in accordance with the method of ASTM D-696. The difference in shrinkage between the stainless steel (SUS) frame and the plastic member may be not greater than 0.003 cm/cm, as measured in accordance with the method of ASTM C356.

In an embodiment, the difference in shrinkage between the stainless steel (SUS) frame and the plastic member is not greater than 0.002 cm/cm, as measured in accordance with the method of ASTM C356.

Next, the present invention will be described in more detail with reference to some examples. It should be understood that these examples are provided for illustration only and are not to be in any way construed as limiting the present invention.

Descriptions of details apparent to those skilled in the art will be omitted herein.

### EXAMPLES

Details of components used in Examples 1-2 and Comparative Examples 1-4 are as follows:

### (A) Polycarbonate resin

A mixture of 40 wt% of a polycarbonate resin (PC-1) having a melt flow index (300 °C, 1.2 kg) of 8 g/10 min, 41 wt% of a polycarbonate resin (PC-2) having a melt flow index of 20 g/10 min, and 19 wt% of a polycarbonate resin (PC-3) having a melt flow index of 62 g/10 min was used. The melt flow indexes were measured in accordance with ISO 1133

### (B) Rubber modified aromatic vinyl graft copolymer resins

(B1) g-ABS: A graft polymer of 55 wt% of an acrylonitrile-styrene copolymer composed of a styrene monomer and acrylonitrile (SM/AN) in a weight ratio of 71/29 onto 45 wt% of a polybutadiene rubber (PBR) having a Z-average particle size of 310 nm
(B2) SAN: A SAN resin having a melt flow index (MI, 200 °C, 5kg) of 5 g/10 min, an acrylonitrile content 24 wt%, and an Mw of 150,000 g/mol

### (C) Glass fibers

(C1) A non-adhesive glass fiber having a diameter of 13 µm, a length of 3 mm, and a circular cross section
(C2) A non-adhesive glass fiber having a diameter of 13 µm, a length of 4 mm, and a circular cross section
(C3) Adhesive glass fiber having a diameter of 13 µm, a length of 3 mm, a circular cross section, and a surface treated with an epoxy
(C4) Adhesive glass fiber having a diameter of 13 µm, a length of 3 mm, a circular cross section, and a surface treated with a silane coupling agent
(C5) Adhesive glass fiber having a diameter of 13 µm, a length of 3 mm, a circular cross section, and a surface treated with a urethane

### Examples 1-2 and Comparative Examples 1-3

Compositions were prepared as shown in Table 1. To each of the compositions were added 13 parts by weight of bisphenol A bis(diphenyl phosphate) (BDP, Daihachi), 0.8 parts by weight of Teflon (Trade name) 7AJ (DuPont, U.S.) as an anti-drip agent, 0.3 parts by weight of octadecyl 3-(3,5-di-t-butyl-4-hydrixyphenyl)propionate (IRGANOX 1076) as an antioxidant, and 0.4 parts by weight of fatty acid ester of neopentylpolyol (UNISTER H-476) as a lubricant. The mixture was injected by steam molding (RHCM) and released to produce a plastic member. The plastic member was produced under the following conditions: Injection temperature = 240-270 °C, steam temperature in the mold = 150-170 °C, mold temperature = 130 °C, heating time = 10-15 sec, mold temperature upon release = 130 °C, cooling time = 10-15 sec. The physical properties of the plastic member were measured by the following methods. The results are shown in Table 1.

### Comparative Example 4

The same composition as that of Example 1 was prepared. The composition was extruded in a 450, 36L/D twin screw type extruder at 250 °C to produce pellets. After drying at 80 °C for 4 hr, the pellets were injected using a 6 oz injection molding machine to produce specimens. The specimens were produced under the following conditions: molding temperature = 250-280 °C, mold temperature = 60-150 °C.

### Methods for evaluation of physical properties

1) Tensile elongation (%) was measured by ASTM D 638 for 2 mm thick specimens.
2) Gloss was measured by ASTM D 2457 (sample size: 20 cm x 30 cm, thickness = 1 to 2 t).
3) Surface roughness (Ra, nm) was measured by ASTM D 4417-B (sample size: 20 cm × 30 cm, thickness = 1 to 2 t).
4) Shrinkage (cm/cm) was measured by ASTM C356 (sample size: 6 inch × 6 inch, thickness = 2.5 t).

| **TABLE 1** | | (parts by weight) | | | | | |
|---|---|---|---|---|---|---|---|
| | | Example 1 | Example 2 | Comparative Example 1 | Comparative Example 2 | Comparative Example 3 | Comparative Example 4 |
| (A) PC | | 78 | 78 | 78 | 78 | 78 | 78 |
| (B) | (B1) | 6 | 6 | 6 | 6 | 6 | 6 |
| | (B2) | 5 | 5 | 5 | 5 | 5 | 5 |
| (C1) GF | | 11 | - | - | - | - | 11 |
| (C2) GF | | - | 11 | - | - | - | - |
| (C3) GF | | - | - | 11 | - | - | - |
| (C4) GF | | - | - | - | 11 | - | - |
| (C5) GF | | - | - | - | - | 11 | - |
| Molding process | | Steam molding | Steam molding | Steam molding | Steam molding | Steam molding | Extrusion/inje ction |
| Tensile elongation (%) | | 5.0 | 5.9 | 3.4 | 3.3 | 4.6 | - |
| Gloss | | 98 | 97 | 92 | 92 | 93 | 92 |
| Surface roughness (Ra) | | 10 nm | 10 nm | 50 nm | 50 nm | 50 nm | 130 nm |
| Shrinkage (cm/cm) | | 0.002 | 0.002 | 0.002 | 0.004 | 0.004 | 0.002 |

As can be seen from the results in Table 1, the plastic members of Examples 1-2 showed satisfactory results in terms of appearance, elongation, gloss, surface roughness and shrinkage. In contrast, the plastic members of Comparative Examples 1-3, which were produced using the surface-treated glass fibers instead of the non-adhesive glass fibers, showed low gloss values, low tensile strength values and high surface roughness values with poor appearance. The specimen of Comparative Example 4 produced by extrusion/injection instead of steam molding (RHCM) had a greatly reduced gloss and a considerably increased surface roughness with poor appearance.

## Claims

1. A television housing having a structure comprising:
a stainless steel (SUS) frame; and
a plastic member in contact with at least one side of the stainless steel frame,
wherein the plastic member comprises (A) a polycarbonate resin, (B) a rubber modified aromatic vinyl graft copolymer resin, and (C) a non-adhesive glass fiber.

2. The television housing according to claim 1, wherein the plastic member is produced by a steam molding process.

3. The television housing according to claim 1 or 2, wherein the plastic member has a gloss of at least 95, as measured in accordance with the method of ASTM D 2457, and a surface roughness (Ra) not greater than 20 nm, as measured in accordance with the method of ASTM D 4417-B.

4. The television housing according to any of claims 1 to 3, wherein the difference in shrinkage between the stainless steel (SUS) frame and the plastic member is not greater than 0.003 cm/cm, as measured in accordance with the method of ASTM C356.

5. The television housing according to any of claims 1 to 4, wherein the non-adhesive glass fiber (C) has an average length of 2 to 5 mm and an average diameter of 10 to 20 µm.

6. The television housing according to any of claims 1 to 5, wherein the non-adhesive glass fiber (C) is not exposed to the surface of the plastic member.

7. The television housing according to any of claims 1 to 6, wherein the plastic member comprises at least one of flame retardants, impact-reinforcing agents, anti-drip agents, antibacterial agents, heat stabilizers, antioxidants, release agents, light stabilizers, inorganic additives, surfactants, plasticizers, lubricants, antistatic agents, and colorants.

8. A method for manufacturing a television housing, comprising:
steam-molding (A) a polycarbonate resin, (B) a rubber modified aromatic vinyl graft copolymer resin, and (C) a non-adhesive glass fiber into a plastic member; and
bonding the plastic member to a stainless steel (SUS) frame.

9. The method according to claim 8, wherein the steam molding is performed by a rapid heat cycle molding (RHCM) process.

## Patentansprüche

1. Fernsehergehäuse mit einer Struktur, umfassend:
einen Rahmen aus rostfreiem Stahl (SUS); und
ein Kunststoffelement in Kontakt mit mindestens einer Seite des Rahmens aus rostfreiem Stahl, wobei das Kunststoffelement (A) ein Polycarbonat-Harz, (B) ein kautschukmodifiziertes aromatisches Vinyl-Propf-Copolymer-Harz, und (C) eine nichtklebende Glasfaser umfasst.

2. Fernsehergehäuse nach Anspruch 1, wobei das Kunststoffelement mittels eines Dampfformprozesses hergestellt ist.

3. Fernsehergehäuse nach Anspruch 1 oder 2, wobei das Kunststoffelement einen Glanz von mindestens 95 bei Messung gemäß dem Verfahren nach ASTM D 2457 und eine Oberflächenrauheit (Ra) von nicht größer als 20 nm bei Messung gemäß dem Verfahren nach ASTM D 4417-B aufweist.

4. Fernsehergehäuse nach irgendeinem der Ansprüche 1 bis 3, wobei der Unterschied im Schrumpf zwischen dem Rahmen aus rostfreiem Stahl (SUS) und dem Kunststoffelement nicht größer als 0,003 cm/cm bei Messung gemäß dem Verfahren nach ASTM C356 ist.

5. Fernsehergehäuse nach irgendeinem der Ansprüche 1 bis 4, wobei die nichtklebende Glasfaser (C) eine durchschnittliche Länge von 2 bis 5 mm und einen durchschnittlichen Durchmesser von 10 bis 20 µm aufweist.

6. Fernsehergehäuse nach irgendeinem der Ansprüche 1 bis 5, wobei die nichtklebende Glasfaser (C) nicht der Oberfläche des Kunststoffelements ausgesetzt ist.

7. Fernsehergehäuse nach irgendeinem der Ansprüche 1 bis 6, wobei das Kunststoffelement wenigstens eines von Flammschutzmitteln, Schlagverstärkungsmitteln, Antitropfmitteln, antibakteriellen Mitteln, Hitzestabilisatoren, Antioxidantien, Entformungsmitteln, Lichtstabilisatoren, anorganischen Additiven, oberflächenaktiven Stoffen, Weichmachern, Schmiermitteln, antistatischen Mitteln und Farbstoffen umfasst.

8. Verfahren zur Herstellung eines Fernsehergehäuses, umfassend:
Dampfformen (A) eines Polycarbonat-Harzes, (B) eines kautschukmodifizierten aromatischen Vinyl-Propf Copolymer-Harzes und (C) einer nichtklebenden Glasfaser zu einem Kunststoffelement; und
Verbinden bzw. Bonden bzw. Kleben des Kunststoffelements an einen Rahmen aus rostfreiem Stahl (SUS).

9. Verfahren nach Anspruch 8, wobei das Dampfformen mittels eines Schnell-Hitzezyklus-Form (Rapid Heat Cycle Molding, RHCM)-Prozesses durchgeführt wird.

## Revendications

1. Un coffret de télévision avec une structure comprenant :
un châssis en acier inoxydable (SUS) ; et
un élément en plastique en contact avec au moins un côté du châssis en acier inoxydable ;
dans lequel l'élément en plastique comprend (A) une résine polycarbonate, (B) une résine de copolymère greffé vinylique aromatique de caoutchouc modifié, et (C) une fibre de verre non adhésive.

2. Le coffret de télévision de la revendication 1, dans lequel l'élément en plastique est produit par un procédé de moulage à la vapeur.

3. Le coffret de télévision de la revendication 1 ou 2, dans lequel l'élément en plastique présente une brillance d'au moins 95, telle que mesurée selon la méthode ASTM D 2457, et une rugosité de surface (Ra) non supérieure à 20 nm, telle que mesurée selon la méthode ASTM D 4417-B.

4. Le coffret de télévision de l'une des revendications 1 à 3, dans lequel la différence de rétreint entre le châssis en acier inoxydable (SUS) et l'élément en plastique n'est pas supérieure à 0,003 cm/cm, tel que mesurée selon la méthode ASTM C 356.

5. Le coffret de télévision de l'une des revendications 1 à 4, dans lequel la fibre de verre non adhésive (C) présente une longueur moyenne de 2 à 5 mm et un diamètre moyen de 10 à 20 µm.

6. Le coffret de télévision de l'une des revendications 1 à 5, dans lequel la fibre de verre non adhésive (C) n'est pas exposée en surface de l'élément en plastique.

7. Le coffret de télévision de l'une des revendications 1 à 6, dans lequel l'élément en plastique comprend au moins l'un d'entre des retardateurs de flamme, des agents de renforcement aux impacts, des agents anti-égouttage, des agents antibactériens, des stabilisateurs à la chaleur, des antioxydants, des agents de libération, des stabilisants à la lumière, des adhésifs minéraux, des tensioactifs, des plastifiants, des lubrifiants, des agents antistatiques et des colorants.

8. Un procédé de fabrication d'un coffret de télévision, comprenant :
le moulage à la vapeur (A) d'une résine polycarbonate, (B) d'une résine copolymère greffé vinylique aromatique de caoutchouc modifié et (C) d'une fibre de verre non adhésive pour donner un élément en plastique ; et
le collage de l'élément en plastique à un châssis en acier inoxydable (SUS).

9. Le procédé de la revendication 8, dans lequel le moulage à vapeur est effectué par un processus de moulage à cycle thermique rapide (RHCM).
